# EUROPÄISCHE PATENTSCHRIFT

(11) **EP 2 947 364 B1**
(45) Veröffentlichungstag und Bekanntmachung des Hinweises auf die Patenterteilung: **11.04.2018**
(21) Anmeldenummer: 15169226.6
(22) Anmeldetag: 26.05.2015
(51) Int. Cl.: F16L 33/00, A61H 19/00, F16L 33/30, F16L 47/06, F16L 33/34, F16L 33/22, B29L 31/00, B29C 70/74, A61H 23/02

(54) **SCHLAUCHVERBINDUNGS-VORRICHTUNG UND MASSAGE-TOY MIT EINER SOLCHEN SCHLAUCHVERBINDUNGS-VORRICHTUNG**
HOSE CONNECTION DEVICE AND MASSAGE TOY WITH SUCH A HOSE CONNECTION DEVICE
DISPOSITIF DE RACCORD POUR FLEXIBLES ET APPAREIL DE MASSAGE DOTÉ D'UN TEL DISPOSITIF DE RACCORD

(30) Priorität: 23.05.2014 DE 102014209929
(43) Veröffentlichungstag der Anmeldung: 25.11.2015
(73) Patentinhaber: Fun Factory GmbH, 28197 Bremen (DE)
(72) Erfinder: Posener, Heiko, 27412 Buchholz / Vorwerk (DE)
(74) Vertreter: Eisenführ Speiser

(56) Entgegenhaltungen:
- DE-C1- 3 815 167
- DE-U1- 9 406 337
- DE-U1-202013 103 173

## Beschreibung

Die Erfindung betrifft eine Schlauchverbindungs-Vorrichtung zum Verbinden eines elastischen flexiblen Schlauchs mit einem formsteifen Stutzen. Ferner betrifft die Erfindung einen Schlauch mit einer Schlauchverbindungs-Vorrichtung, ein System sowie ein Massage-Toy mit einem Toy-Korpus, der als formsteifer Stutzen ausgebildet ist und eine elektrische Einrichtung zum Betrieb des Massage-Toys aufweist und einer elastischen Toy-Hülle, die als flexibler Schlauch ausgebildet ist und mit dem Toy-Korpus verbunden ist, um einen Massageschaft zu bilden.

Es ist ein häufig auftretendes Problem, elastische flexible Schläuche mit einem formsteifen Stutzen fluiddicht zu verbinden. Üblicherweise wird dabei ein Ende des Schlauchs muffenartig auf den Stutzen aufgeschoben und beispielsweise mit einer Schlauchschelle kraftschlüssig durch eine Klemmung zu befestigt. Bekannt ist auch, den elastischen flexiblen Schlauch mittels einer Klebeverbindung mit dem Stutzen zu verbinden. Eine solche Klebeverbindung ist insbesondere bei den eingangs genannten Massage-Toys verbreitet, bei denen eine elastische flexible Hülle, beispielsweise ein Silikonkörper, mit einem Toy-Korpus, der in der Regel aus einem harten Kunststoff ist und den Handgriff des Massage-Toys bildet, verbunden wird. Bei solchen Massage-Toys ist der Einsatz von Schlauchschellen aus optischen, hygienischen und gesundheitlichen Gründen nicht möglich.

Aus dem Bereich der Massage-Toys ist auch bekannt, die flexible Hülle mittels einer Klemmverbindung mit dem Toy-Korpus zu verbinden. Dies ist beispielsweise in DE 20 2013 103 173 U1 offenbart. Die elastische Hülle ist bei diesem Massage-Toy in eine Ringnut an dem Handgriff eingelegt und dort mittels eines inneren und eines äußeren Klemmrings kraftschlüssig befestigt. Nachteilig hieran ist, dass einerseits mehrere Arbeitsschritte notwendig sind, um die Toy-Hülle mit dem Toy-Korpus zu verbinden, andererseits sind an der Verbindungsstelle kleine Schlitze und Öffnungen vorhanden, welche aus hygienischen Gründen nicht erwünscht sind.

Aus dem allgemeinen Bereich der Schlauchverbindungen sind verschiedene Schlauchverbindungsvorrichtungen zum formschlüssigen Verbinden zweier Schläuche bzw. eines Schlauchs mit einem Stutzen bekannt. Derartige Schlauchverbindungs-Vorrichtungen sind beispielsweise in DE 1 926 538, DE 75 39 855 U1 oder WO 01/63163 A1 offenbart. Bei diesen drei Vorrichtungen wird jeweils ein Schlauchstück muffenartig über einen formsteifen Stutzen geschoben. Zwischen dem Schlauchstück und dem formsteifen Stutzen ist ein ringförmiger Zwischenkörper angeordnet, der verschiedene Formschlussmittel, wie etwa Haken, Rastnasen oder Vorsprünge aufweist. Der Zwischenkörper wirkt an seiner inneren Seite mit der Außenumfangsfläche des Stutzens zusammen und an seiner Außenseite mit der radial inneren Oberfläche des Schlauchstücks.

Zwar ist durch eine derartige Vorrichtung eine einfache und formschlüssige Verbindung zwischen einem Schlauchstück und einem Stutzen erreicht, die auch je nach Gestaltung des Zwischenkörpers fluiddicht sein kann. Allerdings bedingen alle drei Vorrichtungen, dass das Schlauchstück eine gewisse Festigkeit aufweist, da sonst eine dauerhafte formschlüssige Verbindung nicht gewährt ist.

Bei den drei aus dem Stand der Technik bekannten Schlauchverbindungs-Vorrichtungen ist demnach, wenn ein elastischer flexibler Schlauch muffenartig über den Stutzen geschoben wird, stets ein zusätzliches Element, wie etwa eine Schlauchschelle, notwendig, um eine dauerhafte Verbindung herzustellen. Diese kann jedoch, aus bereits erwähnten Gründen, bei den eingangs genannten Massage-Toys nicht verwendet werden.

DE 94 06 337 U1 offenbart eine Schlauchleitung mit einem Schlauch, dessen Wandung eine polymere Innenschicht, mindestens eine textile Verstärkungsschicht sowie eine polymere Außenschicht aufweist. Der Schlauch ist an mindestens einem seiner Endbereiche mit einem weiblichen Steckkupplungselement fest verbunden. Das Steckkupplungselement ist in seiner gesamten Länge derart vollständig in die Schlauchwandung integriert und kraftschlüssig mit dieser verbunden, so dass seine äußere Mantelfläche bis an die Stirnkante vollständig von der Verstärkungsschicht umfasst und mit dieser kraftschlüssig verbunden ist. Die innere Mantelfläche des Kupplungselements ist mit der Innenschicht des Schlauchs kraftschlüssig verbunden.

Ferner offenbart DE 20 2013 103 173 U1 eine Massagevorrichtung zur sexuellen Stimulation mit einer Handhabungseinheit und einem mit der Handhabungseinheit verbundenen Stimulationskörper. Die Massagevorrichtung zeichnet sich dadurch aus, dass der Stimulationskörper eine druckdicht mit der Handhabungseinheit verbundene flexible Hülle aufweist, wobei die Handhabungseinheit Mittel zur Einstellung eines die Festigkeit des Stimulationskörpers festlegenden Innendrucks aufweist. Die flexible Hülle ist radial äußerlich mit der Handhabungseinheit verbunden.

Die DE 3815167C1 offenbart eine Schlauchverbindungs-Vorrichtung zum Verbinden eines elastischen, flexiblen Schlauchs mit einem formsteifen Stutzen, umfassend ein ein einziges Formschlussmittel aufweisendes hülsenförmiges Kopplungselement, zum formschlüssigen Koppeln mit dem Stutzen, und einem ringförmigen Klemmmittel.

Aufgabe der vorliegenden Erfindung ist es daher, eine Schlauchverbindungs-Vorrichtung anzugeben, mittels der ein elastischer flexibler Schlauch mit einem formsteifen Stutzen auf einfache Art und Weise dauerhaft und insbesondere fluiddicht verbindbar ist.

Diese Aufgabe wird bei einer Schlauchverbindungs-Vorrichtung der eingangs genannten Art mit den Merkmalen des Anspruchs 1 gelöst, nämlich dadurch, dass die Schlauchverbindungs-Vorrichtung umfasst: Wenigstens ein erstes Formschlussmittel aufweisendes Kopplungselement, zum formschlüssigen Koppeln mit dem Stutzen, und einen ringförmigen Stützkörper, der das Kopplungselement umfänglich abstützt, wobei sich die Formschlussmittel radial innerlich an dem ringförmigen Stützkörper erstrecken und wobei der ringförmige Stützkörper zur Befestigung an dem flexiblen Schlauch angepasst ist, wobei eine Mehrzahl an einzelnen Kopplungselementen um den Umfang des ringförmigen Stützkörpers verteilt vorgesehen ist, die mittels des ringförmigen Stützkörpers miteinander verbunden sind. Nach der Befestigung ist eine Aufhebung der Befestigung nicht mehr vorgesehen bzw. ist eine Auflösung der Befestigung ohne Beschädigung bzw. Zerstörung der Befestigung nicht vorgesehen.

Soweit in der vorliegenden Anmeldung die Verbindung des Schlauchs mit dem Stutzen fluiddicht ist, so ist damit vor allem wasser- und sekretdicht gemeint.

Unter den Schutzbereich des Anspruchs 1 fällt auch die Verbindung eines Schlauchs und eines Stutzen, die beide gleich oder in etwa gleich formsteif bzw. gleich elastisch bzw. flexibel sind, auch wenn bevorzugt der Schlauch flexibler bzw. weniger formsteif ist, als der Stutzen.

Demnach weist das wenigstens eine Kopplungselement erste Formschlussmittel zum formschlüssigen Koppeln mit dem Stutzen auf. Der Stutzen weist vorzugsweise zweite mit den ersten Formschlussmitteln korrespondierende Formschlussmittel auf. Die Formschlussmittel sind dazu angepasst, ein formschlüssiges Koppeln oder Verbinden zwischen dem elastischen flexiblen Schlauch und dem formsteifen Stutzen zu ermöglichen. Das wenigstens eine Kopplungselement, welches die ersten Formschlussmittel aufweist, ist erfindungsgemäß mittels eines ringförmigen Stützkörpers umfänglich abgestützt. Der Stützkörper dient dazu, dem elastischen flexiblen Schlauch in dem Bereich der Verbindung mit dem formsteifen Stutzen eine gewisse Stabilität zu verleihen und die Elastizität des Schlauchs einzuschränken. Er stützt das Kopplungselement umfänglich ab und sorgt dafür, dass sich der flexible Schlauch in dem Bereich der Verbindung umfänglich, also in tangentialer Richtung, elastisch im Wesentlichen nicht aufweiten kann. Dazu ist der Stützkörper erfindungsgemäß dazu angepasst, an dem flexiblen Schlauch befestigt zu werden, sodass dieser den Schlauch stützt und Tangentialkräfte abstützt. Vorzugsweise wird der ringförmige Stützkörper radial innerlich an dem Schlauch befestigt, beispielsweise mittels Kleben. Dadurch wird erreicht, dass die Kopplungskräfte, die bei der formschlüssigen Verbindung zwischen dem Schlauch und dem Stutzen auftreten durch den Stützkörper aufgenommen werden und so der elastische flexible Schlauch mit dem formsteifen Stutzen verbindbar ist.

Gemäß einer ersten bevorzugten Ausgestaltung der Erfindung ist der ringförmige Stützkörper dazu angepasst, stoffschlüssig in den flexiblen Schlauch eingefasst zu werden. Dies ist eine besonders bevorzugte Befestigungsart und der Stützkörper kann so schon bei Herstellung des Schlauchs in diesen eingefasst bzw. integriert werden, beispielsweise beim Spritzgießen, Extrudieren, Handguss oder dergleichen. Der Stützkörper ist dabei vorzugsweise derart in den Schlauch eingefasst, dass die Formschlussmittel des Kopplungselements zugänglich sind. Dadurch wird sichergestellt, dass der Schlauch mit dem eingefassten Stützkörper mit dem Stutzen verbindbar ist.

Gemäß einer weiteren bevorzugten Ausführungsform ist der ringförmige Stützkörper dünnwandig und in tangentialer Richtung unelastisch ausgebildet. Der Begriff "unelastisch" ist hier so zu verstehen, dass der ringförmige Stützkörper wesentlich weniger elastisch als der flexible elastische Schlauch ist, um so eine Umfangsaufweitung im Wesentlichen zu widerstehen. Indem der ringförmige Stützkörper dünnwandig ausgebildet ist, lässt sich dieser besonders einfach und vorteilhaft an dem Schlauch befestigen oder in diesen einfassen. Zudem ermöglicht er so eine gewisse Flexibilität und lässt sich etwa radial zusammendrücken oder biegen. Vorzugsweise ist der ringförmige Stützkörper zudem in axialer Richtung unelastisch ausgebildet.

Besonders bevorzugt ist, dass der ringförmige Stützkörper wenigstens abschnittsweise aus einem Gewebe besteht. Vorzugsweise besteht der ringförmige Stützkörper vollständig aus einem Gewebe (unter Umständen mit darin eingebrachten Stäben). Ein Gewebe lässt sich auf einfache Art und Weise an dem flexiblen Schlauch befestigen und besonders gut in diesen einfassen. Zudem ist ein Gewebe leicht und stellt eine ausreichende Festigkeit bzw. Unelastizität für den Stützkörper bereit. Bevorzugt sind dabei Kettfäden des Gewebes entlang des Umfangs des Stützkörpers und senkrecht zu einer Zentralachse des Stützkörpers und Schussfäden entlang der Zentralachse ausgerichtet oder umgekehrt. So wird die zugfeste Richtung des Gewebes zur Aufnahme der Tangentialkräfte genutzt.

Dabei ist bevorzugt, dass das Gewebe ein Kunststoffgewebe ist. Ein Kunststoffgewebe ist einfach und kostengünstig herzustellen. Zudem lässt sich ein Kunststoffgewebe einfach mit dem Schlauch, welcher ebenfalls vorzugsweise aus einem Kunststoff, wie etwa einem synthetischen Gummi oder einem Silikonmaterial gebildet ist, verwenden. Besonders bevorzugt ist das Gewebe ein Gaze-Material. Gaze bietet durch seine Gewebeart eine besonders vorteilhafte und einfache Verbindbarkeit mit dem elastischen Schlauch, insbesondere wenn der Stützkörper in den elastischen Schlauch eingefasst ist. Zudem bietet Gaze durch die geringe Fadendichte eine höhere Schubelastizität, sodass die Gesamtelastizität des Schlauchs beibehalten werden kann.

Vorzugsweise ist die Fadenzahl von Kette und Schuss des Gewebes im Bereich zwischen 10 und 20 pro Zentimeter, besonders bevorzugt im Bereich zwischen 15 und 20, insbesondere etwa 16 oder 17. Die Fadenstärke beträgt dabei vorzugsweise 150 bis 250 µm, besonders bevorzugt 200 bis 220 µm, insbesondere 200 µm. Die offene Siebfläche ergibt sich dabei zu einem bevorzugten Wert von 40 bis 50 %, besonders bevorzugt 46 %. Bevorzugt weisen sowohl Kette als auch Schuss eine Zugfestigkeit von etwa 1300 N/m² auf.

Gemäß einer weiteren besonderen Ausgestaltung der Erfindung sind vier, fünf, sechs oder sieben Kopplungselemente, um den Umfang des ringförmigen Stützkörpers verteilt, vorgesehen. Indem nicht nur ein Kopplungselement, sondern eine Mehrzahl an Kopplungselementen vorgesehen ist, ist eine verbesserte Verbindbarkeit zwischen dem flexiblen elastischen Schlauch und dem Stutzen erreicht und die Kopplungskräfte können um den Umfang verteilt werden. Es ist eine sichere Verbindung erreicht, die weniger zum selbsttätigen Lösen neigt. Vorzugsweise sind die Kopplungselemente gleichmäßig um den Umfang verteilt. Sind beispielsweise vier Kopplungselemente vorgesehen, sind diese vorzugsweise jeweils um 90° zueinander versetzt angeordnet. Bei sechs Kopplungselementen sind diese vorzugsweise jeweils um 60° zueinander versetzt angeordnet. Es ist nicht bevorzugt, eine zu große Anzahl Kopplungselemente, wie etwa 20 Kopplungselemente, vorzusehen, da darunter die Flexibilität des ringförmigen Stützkörpers leiden kann und eine formschlüssige Verbindung zwischen dem Schlauch und dem Stutzen erschwert wird.

Erfindungsgemäß sind die einzelnen Kopplungselemente mittels des ringförmigen Stützkörpers miteinander verbunden. Beispielsweise können die Kopplungselemente einstückig mit dem Stützkörper verbunden sein. Bevorzugt etwa sind die Kopplungselemente radial innerlich auf den ringförmigen Stützkörper aufgeklebt. Besonders bevorzugt sind die Kopplungselemente radial innerlich an den Stützkörper mittels Kunststoffschweißen angeschweißt. In einer Alternative sind die Kopplungselemente Teil des ringförmigen Stützkörpers und jeweils durch Abschnitte des beispielsweise Gewebes miteinander verbunden. In einer weiteren Alternative sind die Kopplungselemente und der Stützkörper einstückig gebildet, beispielsweise aus einem Kunststoffmaterial und die Abschnitte zwischen den Kopplungselementen sind als Abschnitte mit geringer Materialstärke ausgebildet, so dass diese folienartig sind. Dadurch ist eine besonders einfache Herstellbarkeit der Vorrichtung erreicht.

In einer bevorzugten Weiterbildung weist das Kopplungselement eine Ausnehmung auf, die das erste Formschlussmittel bildet. Die Ausnehmung erstreckt sich vorzugsweise in radialer Richtung in das Kopplungselement hinein.

Bevorzugt bildet die Ausnehmung einen hintergreifbaren Abschnitt, der von einem korrespondierenden zweiten Formschlussmittel an dem Stutzen hintergreifbar ist, um so die formschlüssige Verbindung herzustellen. Dies ist eine einfache Art der formschlüssigen Verbindung, die ebenfalls einfach herzustellen ist. Die Ausnehmung kann beispielsweise durch eine Wand, eine Rampe, einen Vorsprung einer Stufe, eine Nut, eine Rastnase- oder dergleichen definiert sein.

Bevorzugt ist die Ausnehmung von einer radial nach innen bezogen auf den ringförmigen Stützkörper vorstehenden Wand umgeben, die den inneren freien Querschnitt bezogen auf den ringförmigen Stützkörper verengt. Die Wand, die vorzugsweise auch die Kante der Ausnehmung bildet, ist vorzugsweise so angeordnet, dass diese im Wesentlichen flächenbündig mit der inneren Oberfläche des Schlauchs ausgerichtet ist, wenn der Stützkörper und die Kopplungselemente an dem Schlauch befestigt sind, insbesondere in diesen eingefasst sind.

Gemäß einer weiteren bevorzugten Ausgestaltung weist das Kopplungselement eine Führung zum Führen des zweiten Formschlussmittels des Stutzens beim Herstellen der Verbindung des elastischen flexiblen Schlauchs mit dem formsteifen Stutzen auf. Eine derartige Führung erleichtert einerseits das formschlüssige Verbinden des Schlauchs mit dem Stutzen, indem die zweiten Formschlussmittel beim Herstellen der Verbindung geführt werden und so die Handhabung durch einen Monteur wesentlich vereinfacht ist. Ferner stellt die Führung darüberhinaus sicher, dass die zweiten Formschlussmittel mit den ersten Formschlussmitteln in Eingriff kommen und so die formschlüssige Verbindung hergestellt wird.

Besonders bevorzugt weist die Führung eine schräge Fläche auf, die in axialer Richtung den freien inneren Querschnitt von einem axialen Ende des ringförmigen Stützkörpers bis zum ersten Formschlussmittel hin verjüngt. Eine derartige schräge Fläche, die eine Rampe bildet, ist ein einfaches Element, um eine Führung zu bilden. Die schräge Fläche erweitert den freien Querschnitt von dem Formschlussmittel aus zum axialen Ende der Vorrichtung hin und vorzugsweise zum axialen Ende des Schlauchs hin und bildet so eine Art Einführschräge für den Stutzen. Dadurch sind die Montage und die Herstellung der formschlüssigen Verbindung zwischen dem Schlauch und dem Stutzen weiter vereinfacht.

Ferner ist bevorzugt, dass das Kopplungselement eine zweite Führung zum Führen des zweiten Formschlussmittels des Stutzens beim Herstellen der Verbindung des elastischen flexiblen Schlauchs mit dem formsteifen Stutzen aufweist, welche bezogen auf das erste Formschlussmittel zum gegenüberliegenden axialen Ende des ringförmigen Stützkörpers hin ausgerichtet ist. Dadurch ist die Vorrichtung, umfassend den Stützkörper und das Kopplungselement, bezogen auf eine Ebene senkrecht zur Zentralachse des ringförmigen Stützkörpers symmetrisch ausgebildet. Dadurch ist das Befestigen des Stützkörpers samt Kopplungselement an dem flexiblen elastischen Schlauch unabhängig von einer axialen Ausrichtung der Vorrichtung, wodurch die Herstellung weiter vereinfacht ist. Die Fehleranfälligkeit des Herstellungsprozesses ist reduziert und eine Fehlmontage wird verhindert.

Ferner ist bevorzugt vorgesehen, dass die Führung seitliche Begrenzungen aufweist. Die seitlichen Begrenzungen sind vorzugsweise als Wände oder Stege ausgebildet, die vorzugsweise einstückig an dem Kopplungselement angeformt sind. Sie bilden vorzugsweise eine Begrenzung zwischen Führung und dem Material des flexiblen elastischen Schlauchs, wenn die Vorrichtung an diesem montiert ist. Dadurch wird einerseits die Montage weiter vereinfacht, andererseits kann eine Beschädigung des Materials des Schlauchs bei der Montage verhindert werden.

Die eingangs genannte Aufgabe wird ferner gemäß einem zweiten Aspekt der Erfindung gelöst durch einen Schlauch mit einer Vorrichtung nach einer der vorstehend beschriebenen bevorzugten Ausführungsformen einer Schlauchverbindungs-Vorrichtung, wobei der ringförmige Stützkörper durch eine stoffschlüssige Verbindung mit dem Schlauch verbunden ist. Insofern wird vollumfänglich auf die obige Beschreibung Bezug genommen. Vorzugsweise ist der ringförmige Stützkörper in den Schlauch integriert, wobei die ersten Formschlussmittel an einer inneren Oberfläche des Schlauchs zugänglich sind. Der ringförmige Stützkörper ist vorzugsweise in einem Verbindungsabschnitt des Schlauchs, welcher vorzugsweise einem axialen Ende entspricht, in diesen integriert. Der ringförmige Stützkörper kann beispielsweise beim Spritzgießen oder Extrudieren oder Handguss des Schlauchs in diesen integriert werden. Der Schlauch ist dabei flexibel und elastisch, wobei elastisch bedeutet, dass der Schlauch beispielsweise aufgrund eines Innendrucks umfänglich elastisch dehnbar ist, wie dies etwa bei Silikonschläuchen oder dünnwandigen Gummischläuchen der Fall ist.

Gemäß einem weiteren Aspekt wird die eingangs genannte Aufgabe gelöst durch ein System bestehend aus einem Schlauch nach einer der vorstehend beschriebenen bevorzugten Ausführungsform eines Schlauchs mit einer erfindungsgemäßen Schlauchverbindungs-Vorrichtung, und einem formsteifen Stutzen, wobei der formsteife Stutzen auf einer radial äußeren Oberfläche wenigstens eine Rastnase als zweites Formschlussmittel aufweist. Insofern wird vollumfänglich auf die obige Beschreibung Bezug genommen. Der Stutzen weist vorzugsweise eine den Kopplungselementen entsprechende Anzahl an Rastnasen auf. Besonders bevorzugt sind die Kopplungselemente mit einer oben beschriebenen Ausnehmung versehen, in die die Rastnase des Stutzens einrasten kann. Die Rastnasen an dem Stutzen erstrecken sich von diesem radial nach außen und definieren einen Durchmesser, der größer ist als der Innendurchmesser des elastischen flexiblen Schlauchs. Daher ist bevorzugt, dass die Kopplungselemente Führungen aufweisen, die vorzugsweise als schräge Fläche bzw. als Rampe ausgebildet sind, welche in ihrem Einführabschnitt einen Durchmesser definieren, der dem Durchmesser der Rastnasen entspricht oder etwas größer ist. Dadurch ist eine formschlüssige Verbindung zwischen dem Schlauch und dem Stutzen auf einfache Art und Weise möglich. Da die Kopplungselemente untereinander mittels des Stützkörpers verbunden sind und dieser bevorzugt aus einem Gewebe gebildet ist, wird eine gewisse relative Beweglichkeit der Kopplungselemente zueinander ermöglicht, wodurch das Verbinden zwischen Schlauchstutzen weiter vereinfacht ist. In einer Alternative sind die zweiten Formschlussmittel an dem Stutzen als Ausnehmungen ausgebildet und die ersten Formschlussmittel an dem Kopplungselement als Rastnase.

In einem weiteren vierten Aspekt wird die eingangs genannte Aufgabe bei einem Massage-Toy der eingangs genannten Art dadurch gelöst, dass der Toy-Korpus und die Toy-Hülle mittels einer Schlauchverbindungs-Vorrichtung nach einer der vorstehend beschriebenen bevorzugten Ausführungsform in einer Schlauchverbindungs-Vorrichtung verbunden sind. Insofern wird vollumfänglich auf die obige Beschreibung Bezug genommen. Bei einem derartigen erfindungsgemäßen Massage-Toy ist die Toy-Hülle, welche meist aus einem weichen Silikonmaterial besteht und so einen elastischen flexiblen Schlauch bildet, auf einfache Art und Weise mit dem Toy-Korpus verbindbar. Hierdurch können aufwendige Verklebungen und/oder Verschweißungen entfallen und eine dauerhafte formschlüssige Verbindung zwischen Toy-Hülle und Toy-Korpus wird gewährleistet.

In einem weiteren Aspekt wird die eingangs genannte Aufgabe bei einem Verfahren zur Herstellung einer Schlauchverbindung gelöst durch die Schritte: - Anordnen einer Schlauchverbindungs-Vorrichtung nach wenigstens einer der vorstehend beschriebenen bevorzugten Ausführungsformen einer Schlauchverbindungs-Vorrichtung in einer Gussform; - Einfüllen von flüssigem Kunststoffmaterial in die Gussform; - Umschließen des Stützkörpers mit dem Kunststoffmaterial zum Bilden eines Schlauchs mit einer integrierten Schlauchverbindungs-Vorrichtung.

Das Verfahren weist vorzugsweise ferner folgende Schritte auf: Durchdringen von Gewebematerial des Stützkörpers mit dem Kunststoffmaterial; Aushärten und/oder Vernetzen des Kunststoffmaterials; Entnehmen des Schlauchs aus der Gussform; Vorsehen eines Schutzelements für die Gussform zum Schützen des Kopplungselements, so dass Formschlusselemente des Kopplungselements frei von Kunststoffmaterial bleiben. Vorzugsweise ist das Kunststoffmaterial ein Silikonmaterial.

Das Verfahren weist ferner bevorzugt den Schritt auf: - Formschlüssiges Verbinden des Schlauchs mit einem Stutzen mittels der Kopplungselemente. Der Stutzen ist dabei vorzugsweise wie vorstehend beschrieben ausgebildet.

Es soll verstanden werden, dass die fünf Aspekte der Erfindung gleiche und ähnliche bevorzugte Ausführungsformen haben, wie sie insbesondere in den abhängigen Ansprüchen niedergelegt sind.

Nachstehend wird die Erfindung beispielhaft unter Bezugnahme auf die beiliegenden Figuren näher erläutert. Dabei zeigen:
- Figur 1: eine perspektivische (schematische) Ansicht einer Schlauchverbindungs-Vorrichtung;
- Figur 2: eine Seitenansicht einer Schlauchverbindungs-Vorrichtung;
- Figur 3: eine Schnittzeichnung entlang B-B gemäß Figur 2;
- Figur 4: eine Draufsicht auf eine Schlauchverbindungs-Vorrichtung;
- Figur 5: eine weitere perspektivische (schematische) Ansicht einer Schlauchverbindungs-Vorrichtung;
- Figur 6: eine perspektivische Ansicht eines Stück eines Schlauchs mit einer Schlauchverbindungs-Vorrichtung gemäß den Figuren 1 bis 5; und
- Figur 7: einen Querschnitt durch eine Schlauchverbindungsvorrichtung mit Schlauch;
- Figur 8: eine weitere perspektivische (schematische) Ansicht einer Schlauchverbindungsvorrichtung (typische Musteransicht);
- Figur 9: ein Querschnitt durch eine Schlauchverbindungsvorrichtung im montierten Zustand mit einem Stutzen; und
- Figur 10: einen Toy-Korpus mit einem formsteifen Stutzen.

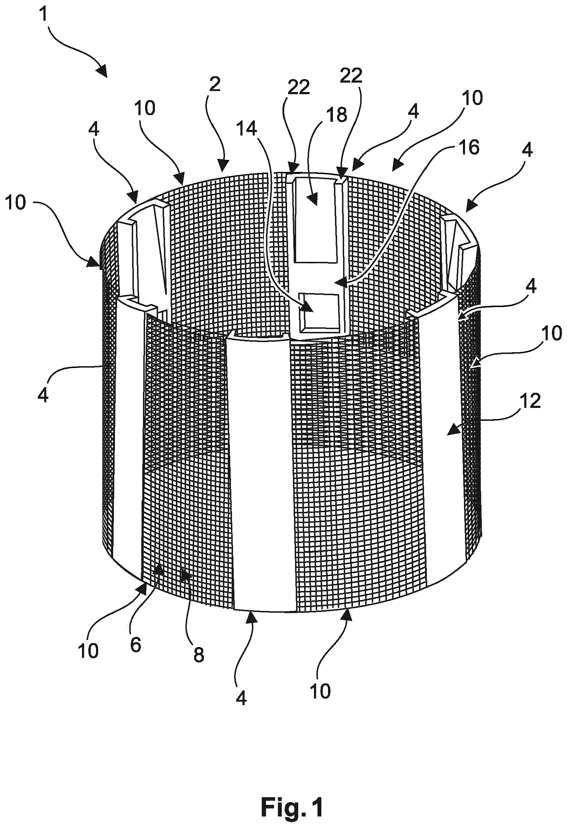

Gemäß den Figuren 1 bis 5 weist eine Schlauchverbindungs-Vorrichtung 1 einen ringförmigen Stützkörper 2 und sechs Kopplungselemente 4 auf. Die Kopplungselemente 4 sind fest mit dem Stützkörper 2 verbunden und erstrecken sich von diesem aus leicht radial nach innen. Alle sechs Kopplungselemente 4 sind identisch ausgebildet. Gemäß diesem Ausführungsbeispiel erstrecken sie sich über die gesamte axiale Länge des ringförmigen Stützkörpers 2 und haben eine stabartige Grundform.

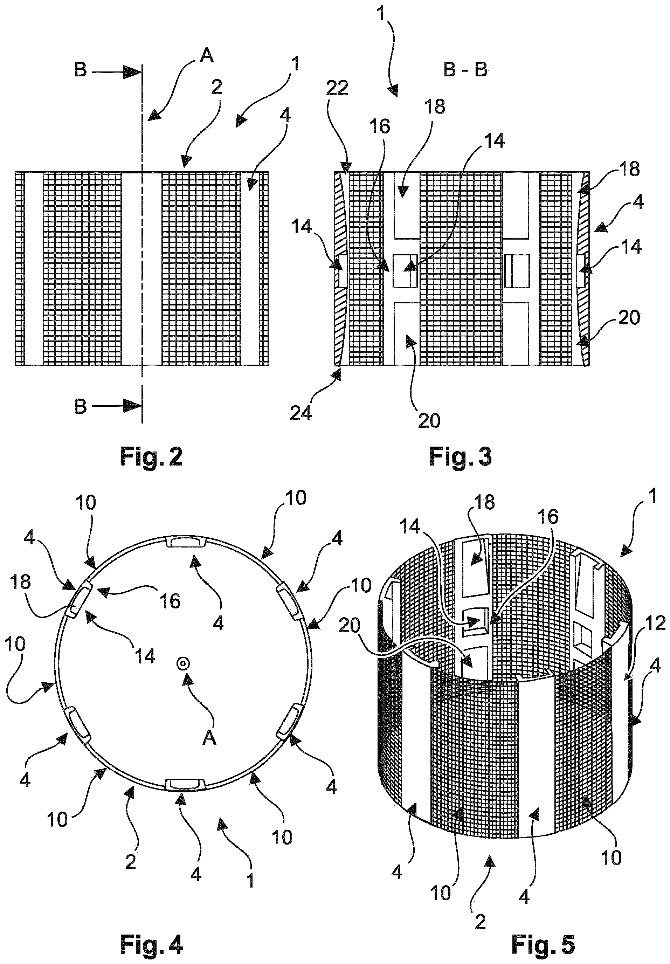

Der Stützkörper 2 ist dünnwandig ausgebildet und dazu angepasst, stoffschlüssig in einen flexiblen elastischen Schlauch eingefasst zu werden. Der Stützkörper 2 besteht abschnittsweise aus einem Gaze-Gewebe 10, welches eine Vielzahl an Kettfäden 6 und Schussfäden 8 aufweist. Die Kettfäden 6 sind entlang des Umfangs des Stützkörpers 2 ausgerichtet und verlaufen senkrecht zur Zentralachse A (vgl. Figur 2) des Stützkörpers 2. Die Schussfäden 8 verlaufen in axialer Richtung und parallel zur Zentralachse A. Dadurch wird eine gewisse Festigkeit des Stützkörpers 2 erreicht und dieser kann tangentiale Kräfte und Spannungen aufnehmen.

Das Gaze-Gewebe, bestehend aus den Kett- und Schussfäden 6, 8 hat gemäß dieser Ausführungsform eine relativ geringe Fadendichte, so dass ein relativ lockeres Gewebe entsteht mit einer geringen Schubfestigkeit. Dies ist vorteilhaft, um den Stützkörper 2 in das Material eines Schlauchs einzufassen und zu integrieren, beispielsweise beim Spritzgießen oder Extrudieren des Schlauchs. Das Material des Schlauchs, welches in der Regel ein synthetisches Gummimaterial ist, kann in die Zwischenräume zwischen den Fäden eindringen und so eine besonders haltbare Verbindung mit der Vorrichtung 1 eingehen. Ferner bietet das relativ lockere Gewebe auch eine hohe Flexibilität, so dass durch das Gewebe die Elastizität des Schlauchs im Wesentlichen nur in Tangentialrichtung, also gegen ein umfängliches Aufweiten eingeschränkt ist.

Die sechs Kopplungselemente 4 sind gleichmäßig um den Umfang des Stützkörpers 2 verteilt und bilden einen Teil desselben. Sechs Gewebeabschnitte 10 sind jeweils zwischen den Kopplungselementen 4 angeordnet und verbinden diese miteinander. Dazu sind die Gewebeabschnitte 10 stoffschlüssig mit den Kopplungselementen 4 verbunden, so dass sich am radial äußeren Umfang der Schlauchverbindungsvorrichtung 1 eine im Wesentlichen einheitliche Oberfläche ergibt. In einer Alternative sind die Kopplungselemente 4 mit ihren Rücken 12 (in Figur 1 nur einer mit Bezugszeichen versehen) gegen einen ringförmigen Stützkörper 2 aus durchgehendem Gewebe 10 geklebt.

Die Kopplungselemente 4 weisen jeweils eine Ausnehmung 14 auf, die ein erstes Formschlussmittel bildet. Die Ausnehmung 14 erstreckt sich an dem Kopplungselement 4 in radialer Richtung. Die Ausnehmung 14 ist gemäß diesem Ausführungsbeispiel rechteckig ausgebildet und etwa in der Mitte des Kopplungselements 4 angeordnet. In anderen Ausführungsformen kann die Ausnehmung 14 auch andere Querschnitte haben, etwa rund oder oval, oder am Rand des Kopplungselements 4 angeordnet sein. Ferner ist es auch möglich, dass anstatt einer Ausnehmung 14 ein anderes Formschlussmittel, wie etwa ein Vorsprung, eine Rastnase, ein Clip, eine Hinterschneidung oder dergleichen vorgesehen ist.

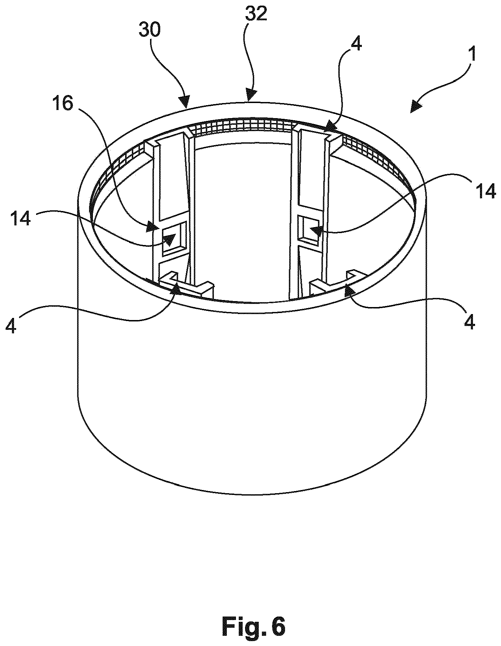

Die Ausnehmung 14 ist von einer Wand 16 umgeben, die den inneren freien Querschnitt, bezogen auf den ringförmigen Stützkörper 2 verengt, wie dies insbesondere aus Figur 4 ersichtlich ist. Die Wand 16 bildet auch eine Abgrenzung der Ausnehmung 14 gegenüber dem Material des Schlauchs, wie dies weiter unten mit Bezug auf Figur 6 genauer beschrieben werden wird.

An den Kopplungselementen 4 sind ferner Führungen 18, 20 vorgesehen, welche bezogen auf die Ausnehmung 14 an gegenüberliegenden axialen Enden des Kopplungselements 4 angeordnet sind. Die Führungen 18, 20 sind jeweils als schräge Fläche ausgebildet, die von den axialen Enden der Kopplungselemente 4 bis an das radial innere Ende der Wand 16 verlaufen, so dass ein zweites Formschlussmittel, wie etwa eine Rastnase an einem Stutzen auf dieser schrägen Fläche der Führung 18, 20 von den axialen Enden aus geführt wird, bis zur Wand 16 gleitet und dann in die Ausnehmung 14 einrasten kann. An den Führungen 18, 20 ist jeweils eine Begrenzung 22, 24 ausgebildet, die im Wesentlichen als eine Verlängerung der Wand 16 ausgebildet ist und ebenso wie die Wand 16 das Kopplungselement 4 gegenüber dem Material des Schlauchs abgrenzt. Die Begrenzungen 22, 24 dienen dazu, die Führung 18, 20 klar zu definieren und beim Fügen eines elastischen Schlauchs, der mit der Vorrichtung 1 ausgestattet ist, und einem entsprechenden Stutzen dafür zu sorgen, dass die zweiten Formschlussmittel des Stutzens nicht von der Führung 18, 20 abrutschen und so das elastische flexible Material des Schlauchs beschädigen können.

Figur 6 illustriert einen Abschnitt eines Schlauchs 30 gemäß einem weiteren Ausführungsbeispiel, wobei in den Schlauch 30 eine Vorrichtung 1 eingefasst bzw. integriert ist. Im Unterschied zu der Vorrichtung 1 gemäß den Figuren 1 bis 5 weist die Vorrichtung 1 gemäß der Figur 6 nur vier Kopplungselemente 4 auf, die um den Umfang eines nicht sichtbaren Stützkörpers herum angeordnet sind. Der Stützkörper ist in Figur 6 nicht zu sehen, da er in das Material des Schlauchs 30 eingefasst ist. Gleiche und ähnliche Elemente sind mit gleichen Bezugszeichen versehen, sodass vollumfänglich auf die obige Beschreibung zu den Figuren 1 bis 5 Bezug genommen wird.

Der Schlauch 30 gemäß Figur 6 ist aus einem flexiblen elastischen Silikonmaterial gebildet und kann beispielsweise ein Endabschnitt einer Toy-Hülle eines Massagegeräts sein. Die Vorrichtung 1 ist samt Stützkörper 2 und Kopplungselementen 4 beim Spritzgießen in den Schlauch 30 eingefasst worden, so dass diese in diesem integriert ist. Die Kopplungselemente 4 weisen jeweils eine Ausnehmung 14 auf, die das erste Formschlussmittel bildet. Die Ausnehmung 14 ist ebenso wie bei den Figuren 1 bis 5 rechteckig geformt und von einer Wand 16 umgeben. Eine Führung ist an den Kopplungselementen 4 gemäß Figur 6 nicht vorgesehen. Der Stützkörper ist aus einem Gaze-Gewebe gebildet.

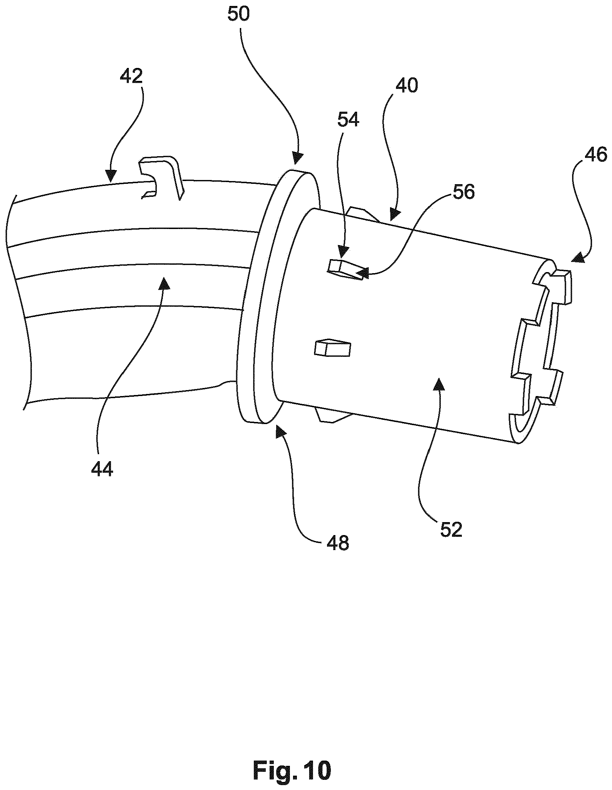

Wie jedoch aus Figur 6 besonders gut zu entnehmen ist, grenzt die Wand 16 die Ausnehmung gegenüber dem Material des Schlauchs 30 ab. Die radial innere Oberfläche der Wand 16 schließt im Wesentlichen flächenbündig mit der radial inneren Oberfläche des Schlauchs 30 ab. Dadurch kann der Schlauch 30 im montierten Zustand mit seiner radial inneren Oberfläche im Wesentlichen vollständig an dem eingeführten Stutzen 40 (vergleiche Figur 10) anliegen. Gemäß Figur 6 weist der Schlauch ferner einen axialen Ringvorsprung 32 auf, der als Dichtung wirkt. Durch die Kopplungselemente 4, welche mit ihren Formschlussmitteln 14 mit entsprechenden Formschlussmitteln an den Stutzen 40 zusammenwirken, ist die axiale Position des Schlauchs 30 an dem Stutzen 40 definiert vorgegeben. Der Ringvorsprung 32 kann daher beispielsweise mit einer axialen Wand 50 an dem Stutzen 40 zusammenwirken und über die definierte Axialposition des Schlauchs 30 auf dem Stutzen 40 mit einer definierten Vorspannkraft beaufschlagt werden, um so eine Dichtung zu bilden. Ferner kann ein weiterer Ringvorsprung an der radial inneren Oberfläche des Schlauchs 30 vorgesehen werden, der über den Stützkörper (in Figur 6 nicht zu sehen) mit einer definierten Vorspannkraft auf den Stutzen 40 gedrückt wird, um so eine Dichtung zu bilden. Dadurch ist mittels der erfindungsgemäßen Schlauchverbindungs-Vorrichtung 1 eine fluiddichte Verbindung zwischen einem Schlauch 30 und einem Stutzen 40 möglich.

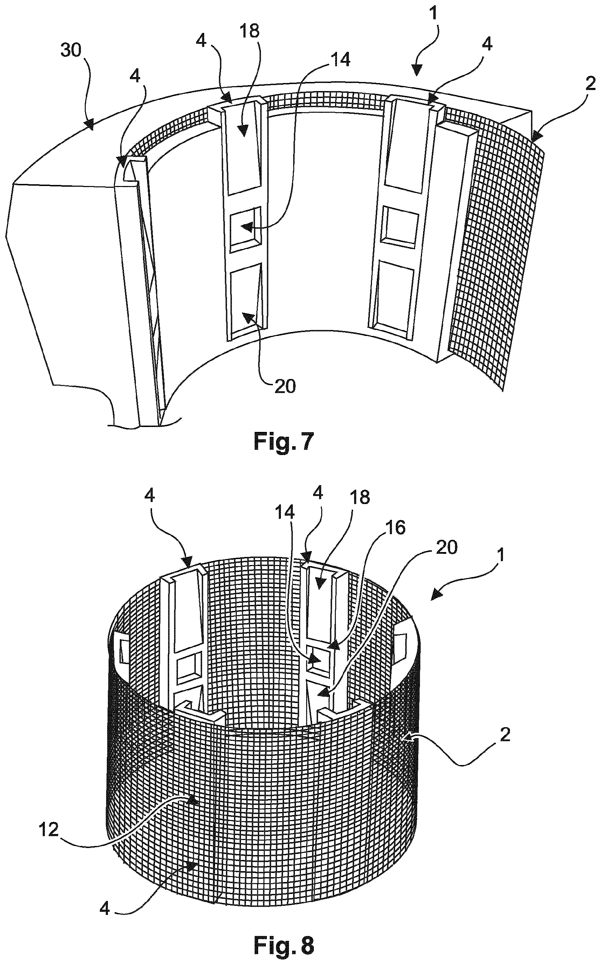

Figur 7 zeigt eine weitere perspektivische Schnittdarstellung einer Schlauchverbindungs-Vorrichtung 1, welche in einen Schlauch 30 eingefasst ist. Die Vorrichtung 1 weist wiederum einen ringförmigen Stützkörper 2 sowie mehrere Kopplungselemente 4 auf. Wie besonders gut in Figur 7 zu erkennen ist, ist der Stützkörper 2 vollständig in das Material des Schlauchs 30 eingefasst und Schlauchmaterial ist auf beiden Seiten sowohl innen als auch außen an dem Stützkörper 2 angeordnet. Das Schlauchmaterial ist vorzugsweise ein Silikonmaterial und Silikon hat die Fähigkeit, in sehr kleine Öffnungen etwa 1 µm einzudringen. Bei einer Kette-Schuss-Anzahl von etwa 16 bis 17 pro Zentimeter, wie dies bevorzugt ist, ergibt sich eine Maschenweite von etwa 400 µm, so dass Silikonmaterial auch zwischen die Fäden in die Maschen des Gewebes des Stützkörpers 2 eindringt und so eine sehr gute Verbindung zwischen Stützkörper 2 und Schlauch 30 erzeugt wird. Die Ausnehmung 14 sowie die schrägen Flächen 18, 20 der Kopplungselemente 4 sind an der Innenseite des Schlauchs 30 zugänglich, so dass dieser mit einem entsprechenden Stutzen verbindbar ist.

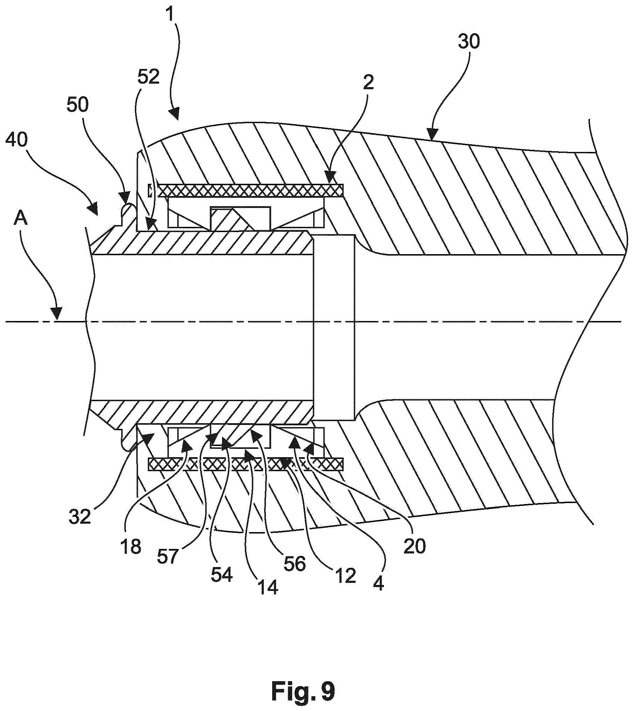

In Figur 8 ist die Vorrichtung 1 in einer Alternative dargestellt. Im Gegensatz zu der in Figur 1 dargestellten Vorrichtung 1 ist der Stützkörper 2 gemäß diesem Ausführungsbeispiel (Figur 8) durchgängig aus einem Gewebe hergestellt und hat eine zylindrische Grundform. Die Kopplungselemente 4 sind mit ihren Rücken 12 (in Figur 8 nur einer mit Bezugszeichen versehen) gegen das Gewebe des Stützkörpers 2 mittels Kunststoffschweißen auf der Innenseite des Stützkörpers 2 befestigt. Dadurch ist einerseits eine leichte Herstellung der Vorrichtung 1 erreicht. Zudem ist auch in axialer Richtung eine sehr gute Sicherung zwischen Kopplungselementen 4 und dem Stützkörper 2 realisiert. Auch gemäß diesem Ausführungsbeispiel 8 weisen die Kopplungselemente Ausnehmungen 14, einen radial nach innen vorstehenden Rand 16 sowie Führungen 18, 20 auf und sind insgesamt identisch zu den oben beschriebenen Kopplungselementen 4 ausgebildet. Figur 9 zeigt in einer Querschnittsdarstellung das Zusammenwirken der Vorrichtung 1, welche in einem Schlauch 30 integriert ist, mit einem Stutzen 40. Der Stutzen 40 ist separat in Figur 10 dargestellt und wird weiter unten im Detail beschrieben.

Wie aus Figur 9 erkennbar, weist die Vorrichtung 1 wiederum einen ringförmigen Stützkörper 2 auf, an dem radial innerlich Kopplungselemente 4 (in Figur 9 nur 2 zu sehen) angeordnet sind. Die Vorrichtung 1 ist so in das Material des Schlauchs 30 integriert, dass die Ausnehmung 14 sowie die Führungen 18, 20 radial innerlich zugänglich sind. Die Kopplungselemente 4 sind mit ihren Rücken 12 radial innerlich an dem Stützkörper 2 befestigt.

Der Stutzen 40 weist auf seiner zylindrischen Mantelfläche 52 mehrere zweite Formschlussmittel 54 in Form von Rastnasen auf. Die Anzahl der um den Umfang verteilten zweiten Formschlussmittel 54 entspricht denen der Kopplungselemente 4. Die Formschlussmittel 54 weisen eine schräge Fläche 56 auf, die dazu vorgesehen ist, beim Fügen des Schlauchs 30 mit dem Stutzen 40 mit der Führung 18 der Kopplungselemente 4 zusammenzuwirken. Zwar ist der Schlauch 30 in Figur 9 auf den Stutzen 40 aufgesteckt dargestellt, allerdings ist aus Figur 9 leicht zu erkennen, wie beim Fügen des Schlauchs 30 auf den Stutzen 40 die Kopplungselemente 4 mit den Formschlussmitteln 54 zusammenwirken. Zunächst wird der Schlauch 30 auf den Stutzen 40 bezogen auf Figur 9 von rechts aufgesteckt, bis die Führungen 18 mit den schrägen Flächen 56 in Kontakt kommen. Wird nun der Schlauch 30 weiter bezogen auf Figur 9 von rechts nach links geschoben, werden die Kopplungselemente auf ihrer die Führung 18 aufweisenden Seite leicht angehoben und radial nach außen verdrängt, was durch die gewisse jedoch beschränkte Elastizität des Stützkörpers 2 erlaubt wird. Wird der Schlauch 30 nun weiter auf den Stutzen 40 aufgeschoben, rutschen die Kopplungselemente 4 weiter auf den Formschlussmitteln 54, bis diese in die Ausnehmung 14 gelangen und so die Vorrichtung 1 auf dem Stutzen 40 einrastet. Das Formschlussmittel 54 weist auf der der schrägen Fläche 56 gegenüberliegenden Seite einen in sich senkrecht zur Längsachse A erstreckende Kante 57 auf, so dass wenn das Formschlussmittel 54 in die Ausnehmung 14 eingerastet ist, eine formschlüssige Verbindung zwischen Vorrichtung 1 und Stutzen 40 und somit auch zwischen dem Schlauch 30 und dem Stutzen 40 erreicht ist, die nicht mehr ohne erheblichen Aufwand gelöst werden kann. Zum Lösen der formschlüssigen Verbindung müsste beispielsweise mit einem Werkzeug die Kopplungselemente 4 wiederum angehoben werden, so dass der Rand 16 um die Ausnehmung 14 herum über die Formschlussmittel 54 gelangt und so der Schlauch 30 wieder vom Stutzen 40 abgezogen werden kann.

Der Schlauch 30 weist an seinem Kopfende (bezogen auf Figur 9 links) einen Ringvorsprung 32 auf (vgl. auch Figur 6). Dieser Ringvorsprung 32 weist einen bezogen auf die Kopplungselemente 4 verringerten Durchmesser auf. Dadurch wird eine Dichtung zwischen dem Ringvorsprung 32 und der Mantelfläche 52 des Stutzens 40 erreicht und so der Schlauch 30 im Stutzen abgedichtet. Die radiale Andrückkraft für die Dichtung wird durch den ringförmigen Stützkörper 2 bereitgestellt.

Ein beispielhafter Stutzen 40, der auch zusammen mit dem Schlauch 30 aus Figur 6 ein erfindungsgemäßes System bilden kann, ist in Figur 10 gezeigt. Der Stutzen 40 ist Teil eines Toy-Korpus 42, der ein Fach 44 zur Aufnahme einer elektrischen Einrichtung zum Betrieb des Massage-Toys umfasst. Der Stutzen 40 hat ein offenes Stirnende 46, aus dem beispielsweise eine Vibratoreinheit für das Massage-Toy herausragen kann und sich in den Schlauch 30 hinein erstrecken kann. Am Fußende 48 des Stutzens 40 ist eine axiale Wand 50 vorgesehen, die mit dem Ringvorsprung 32 des Schlauchs 30 (vgl. Figur 6) zum Abdichten des Schlauchs 30 gegenüber dem Stutzen 40 zusammenwirkt.

Der Stutzen 40 hat eine zylindrische Mantelfläche 52, die in ihrem Durchmesser in etwa dem inneren Durchmesser des Schlauchs 30 entspricht. Auf der zylindrischen Mantelfläche 52 sind zweite Formschlussmittel 54 in Form von Rastnasen vorgesehen. Da gemäß diesem Ausführungsbeispiel (vgl. Figuren 6 und 7) die Kopplungselemente 4 nicht mit einer Führung ausgestattet sind, ist die Rastnase 54 gemäß diesem Ausführungsbeispiel (vgl. Figur 10) mit einer Führung 56 versehen, die als schräge Fläche von der Mantelfläche aus zur Spitze der Rastnase aus Richtung des Stirnendes 46 hin zu dem Fußendes 48 verläuft ansteigend d.h. durchmessererweiternd verläuft. Beim Fügen des Schlauchs 30 auf den Stutzen 40 werden durch diese schräge Fläche 56 die Kopplungselemente 4 leicht angehoben, was das Gaze-Gewebe 10 des Stützkörpers 2 erlaubt und rasten dann so ein, dass die Rastnasen 54 die Wand 16 der Ausnehmung 14 in den Kopplungselementen 4 hintergreift. So ist eine formschlüssige Verbindung zwischen dem elastischen flexiblen Schlauch 30 und dem formsteifen Stutzen 40 erreicht. Soweit in der vorliegenden Anmeldung der Schlauch bzw. der Stutzen, an dem der Schlauch angebracht ist, einen kreisförmigen Querschnitt aufweist, so ist auch jede andere Querschnittsform möglich, bevorzugt ist ein dreieckiger, oder viereckiger oder fünfeckiger oder sonstiger, bevorzug geschlossener Querschnitt.

## Patentansprüche

1. Schlauchverbindungs-Vorrichtung (1) zum Verbinden eines elastischen, flexiblen Schlauchs (30) mit einem formsteifen Stutzen (40), umfassend
wenigstens ein erste Formschlussmittel (14) aufweisendes Kopplungselement (4), zum formschlüssigen Koppeln mit dem Stutzen (40), und
einen ringförmigen Stützkörper (2), der das Kopplungselement (4) umfänglich abstützt, wobei sich die Formschlussmittel (14) radial innerlich an dem ringförmigen Stützkörper (2) erstrecken und wobei der ringförmige Stützkörper (2) zur Befestigung an dem flexiblen Schlauch (30) angepasst ist,
**dadurch gekennzeichnet, dass** eine Mehrzahl an einzelnen Kopplungselementen (4) um den Umfang des ringförmigen Stützkörpers (2) verteilt vorgesehen ist, die mittels des ringförmigen Stützkörpers (2) miteinander verbunden sind.

2. Vorrichtung nach Anspruch 1,
wobei der ringförmige Stützkörper (2) dazu angepasst ist, stoffschlüssig in den flexiblen Schlauch (30) eingefasst zu werden.

3. Vorrichtung nach Anspruch 1 oder 2,
wobei der ringförmige Stützkörper (2) dünnwandig und in tangentialer Richtung unelastisch ausgebildet ist.

4. Vorrichtung nach einem der vorstehenden Ansprüche,
wobei der ringförmige Stützkörper (2) wenigstens Abschnittsweise aus einem Gewebe (10) besteht.

5. Vorrichtung nach Anspruch 4,
wobei das Gewebe (10) ein Kunststoffgewebe ist.

6. Vorrichtung nach Anspruch 4 oder 5,
wobei das Gewebe (10) ein Gaze-Material ist.

7. Vorrichtung nach einem der vorstehenden Ansprüche,
wobei 4, 5, 6 oder 7 Kopplungselemente (4) um den Umfang des ringförmigen Stützkörpers (2) verteilt vorgesehen sind.

8. Vorrichtung nach einem der vorstehenden Ansprüche,
wobei das Kopplungselement (4) eine Ausnehmung (14) aufweist, die das erste Formschlussmittel (14) bildet, wobei die Ausnehmung (14) vorzugsweise einen hintergreifbaren Abschnitt bildet, der von einem korrespondierenden zweiten Formschlussmittel (54) an dem Stutzen (40) hintergreifbar ist, um so die formschlüssige Verbindung herzustellen, und/oder
wobei die Ausnehmung vorzugsweise von einem radial nach Innen vorstehenden Rand (16) umgeben ist, der den inneren freien Querschnitt bezogen auf den ringförmigen Stützkörper (2) verengt.

9. Vorrichtung nach einem der vorstehenden Ansprüche,
wobei das Kopplungselement (4) eine Führung (18, 20) zum Führen der zweiten Formschlussmittel (56) des Stutzens (40) beim Herstellen der Verbindung des elastischen, flexiblen Schlauchs (30) mit dem formsteifen Stutzen (40) aufweist,
wobei die Führung (18, 20) vorzugsweise eine schräge Fläche aufweist, die in axialer Richtung (A) den freien inneren Querschnitt von einem axialen Ende des ringförmigen Stützkörpers (2) bis zum ersten Formschlussmittel (14) hin verjüngt, und/oder wobei das Kopplungselement (4) vorzugsweise eine zweite Führung (20) zum Führen des zweiten Formschlussmittels (56) des Stutzens (40) beim Herstellen der Verbindung des elastischen, flexiblen Schlauchs (30) mit dem formsteifen Stutzen (40) aufweist, welche bezogen auf das erste Formschlussmittel (14) zum gegenüberliegenden axialen Ende des ringförmigen Stützkörpers (2) hin ausgerichtet ist, und/oder wobei die Führung (18, 20) vorzugsweise seitliche Begrenzungen (22, 24) aufweist.

10. Vorrichtung nach einem der vorhergehenden Ansprüche,
**dadurch gekennzeichnet, dass** der Schlauch (30) in etwa die gleiche Formsteifigkeit und/oder Elastizität aufweist, wie der Stutzen (40) oder der Schlauch (30) elastischer, also weniger formsteif ausgebildet ist, als der Stutzen (40).

11. Schlauch (30) mit einer Vorrichtung (1) nach einem der vorstehenden Ansprüche, wobei der ringförmige Stützkörper (2) durch eine stoffschlüssige Verbindung mit dem Schlauch (30) verbunden ist,
wobei der ringförmige Stützkörper (2) vorzugsweise in den Schlauch (30) integriert ist, wobei die ersten Formschlussmittel (14) an einer inneren Oberfläche des Schlauchs (30) zugänglich sind.

12. System bestehend aus einem Schlauch (30) nach Anspruch 11 und einem formsteifen Stutzen (40), wobei der formsteife Stutzen (40) auf einer radial äußeren Oberfläche (52) wenigstens eine Rastnase (56) als zweites Formschlussmittel aufweist.

13. Massage-Toy, mit
einem Toy-Korpus (42), der einen formsteifen Stutzen (40) und eine elektrische Einrichtung zum Betrieb des Massage-Toys aufweist, und
einer elastischen Toy-Hülle, die als flexibler Schlauch (30) ausgebildet ist und mit dem Toy-Korpus (42) verbunden ist, um einen Massageschaft zu bilden,
wobei der Toy-Korpus (42) und die Toy-Hülle mittels einer Vorrichtung (1) nach einem der Ansprüche 1 bis 11 verbunden sind.

14. Verfahren zur Herstellung einer Schlauchverbindung, aufweisend die Schritte
- Anordnen einer Schlauchverbindungs-Vorrichtung nach wenigstens einem der Ansprüche 1 bis 10 in einer Gussform;
- Einfüllen von flüssigem Kunststoffmaterial in die Gussform;
- Umschließen des Stützkörpers (2) mit dem Kunststoffmaterial zum Bilden eines Schlauchs (30) mit einer integrierten Schlauchverbindungs-Vorrichtung; und optional:
- Formschlüssiges Verbinden des Schlauchs (30) mit einem Stutzen (40) mittels der Kopplungselemente (4).

## Claims

1. Tube connection device (1) for connecting a resilient, flexible tube (30) to a dimensionally stable connecting piece (40), comprising
at least one first coupling element (4) which has interlocking means (14) and is intended for interlocking coupling to the connecting piece (40), and
an annular support body (2) which circumferentially supports the coupling element (4), the interlocking means (14) extending radially on the inside of the annular support body (2), and the annular support body (2) being adapted for fastening to the flexible tube (30),
**characterised in that** a plurality of individual coupling elements (4) are distributed over the circumference of the annular support body (2) and interconnected by means of the annular support body (2).

2. Device according to claim 1,
wherein the annular support body (2) is adapted so as to be surrounded by the flexible tube (30) such that it is integrally bonded thereto.

3. Device according to either claim 1 or claim 2,
wherein the annular support body (2) has a thin wall and is non-resilient in the tangential direction.

4. Device according to any of the preceding claims,
wherein the annular support body (2) consists of a woven fabric (10) at least in portions.

5. Device according to claim 4,
wherein the woven fabric (10) is a plastics woven fabric.

6. Device according to either claim 4 or claim 5,
wherein the woven fabric (10) is a gauze material.

7. Device according to any of the preceding claims,
wherein four, five, six or seven coupling elements (4) are distributed over the circumference of the annular support body (2).

8. Device according to any of the preceding claims,
wherein the coupling element (4) has a recess (14) which forms the first interlocking means (14), wherein the recess (14) preferably forms a portion which can be engaged from behind, which portion can be engaged from behind by a corresponding second interlocking means (54) on the connecting piece (40) in order to thereby establish the interlocking connection, and/or
wherein the recess is preferably enclosed by an edge (16) which protrudes radially inwards and narrows the internal free cross section in relation to the annular support body (2).

9. Device according to any of the preceding claims,
wherein the coupling element (4) has a guide (18, 20) for guiding the second interlocking means (56) of the connecting piece (40) when the connection is being established between the resilient, flexible tube (30) and the dimensionally stable connecting piece (40),
wherein the guide (18, 20) preferably has an inclined surface which, in the axial direction (A), reduces the thickness of the free internal cross section from an axial end of the annular support body (2) towards the first interlocking means (14), and/or
wherein the coupling element (4) preferably has a second guide (20) for guiding the second interlocking means (56) of the connecting piece (40) when the connection is being established between the resilient, flexible tube (30) and the dimensionally stable connecting piece (40), which guide is oriented towards the opposing axial end of the annular support body (2) in relation to the first interlocking means (14), and/or
wherein the guide (18, 20) preferably has lateral delimitation means (22, 24).

10. Device according to any of the preceding claims,
**characterised in that** the tube (30) has approximately the same dimensional stability and/or resilience as the connecting piece (40), or the tube (30) is more resilient, i.e. less dimensionally stable, than the connecting piece (40).

11. Tube (30) comprising a device (1) according to any of the preceding claims,
wherein the annular support body (2) is integrally bonded to the tube (30),
wherein the annular support body (2) is preferably integrated in the tube (30),
wherein the first interlocking means (14) are accessible on an inner surface of the tube (30).

12. System consisting of a tube (30) according to claim 11 and a dimensionally stable connecting piece (40), wherein the dimensionally stable connecting piece (40) has at least one latching lug (56) as the second interlocking means on a radially outer surface (52).

13. Massage toy comprising
a toy body (42) which has a dimensionally stable connecting piece (40) and an electric apparatus for operating the massage toy, and
a resilient toy casing which is designed as a flexible tube (30) and is connected to the toy body (42) in order to form a massage shaft,
wherein the toy body (42) and the toy casing are connected by means of a device (1) according to any of claims 1 to 11.

14. Method for establishing a tube connection, having the steps of
- arranging a tube connection device according to at least one of claims 1 to 10 in a casting mould;
- pouring liquid plastics material into the casting mould;
- encasing the support body (2) in the plastics material in order to form a tube (30) having an integrated tube connection device; and optionally
- interlockingly connecting the tube (30) to a connecting piece (40) by means of the coupling elements (4).

## Revendications

1. Dispositif (1) de raccord pour tuyau souple, pour raccorder un tuyau (30) souple élastique à une tubulure (40) de forme rigide, comprenant
au moins un premier élément (4) de liaison, ayant un moyen (14) à complémentarité de forme, de liaison à complémentarité de forme à la tubulure (40) et
une pièce (2) annulaire de tubulure, qui appuie sur le pourtour l'élément (4) de liaison, les moyens (14) à complémentarité de forme s'étendant radialement vers l'intérieur sur la pièce (2) annulaire d'appui et la pièce (2) annulaire d'appui étant propre à être fixée sur le tuyau (30) souple,
**caractérisé en ce qu'**il est prévu une pluralité d'éléments (4) individuels de liaison, répartis sur le pourtour de la pièce (2) annulaire d'appui, qui sont reliés les uns aux autres au moyen de la pièce (2) annulaire d'appui.

2. Dispositif suivant la revendication 1,
dans lequel la pièce (2) annulaire d'appui est propre à être enchâssée à complémentarité de matière dans le tuyau (30) souple.

3. Dispositif suivant la revendication 1 ou 2,
dans lequel la pièce (2) annulaire d'appui est à paroi mince et est inélastique dans la direction tangentielle.

4. Dispositif suivant l'une des revendications précédentes,
dans lequel la pièce (2) annulaire d'appui est constitué, au moins par tronçon, d'une étoffe (10).

5. Dispositif suivant la revendication 4,
dans lequel l'étoffe (10) est une étoffe en matière plastique.

6. Dispositif suivant la revendication 4 ou 5,
dans lequel l'étoffe (10) est un matériau de gaze.

7. Dispositif suivant l'une des revendications précédentes,
dans lequel il est prévu 4, 5, 6 ou 7 éléments (4) de liaison répartis sur le pourtour de la pièce (2) annulaire d'appui.

8. Dispositif suivant l'une des revendications précédentes,
dans lequel l'élément (4) de liaison a un évidement (14), qui forme le premier moyen (14) à complémentarité de forme, l'évidement (14) formant de préférence une partie pouvant être accrochée par l'arrière, qui peut être accrochée par l'arrière par un deuxième moyen (54) à complémentarité de forme correspondant de la tubulure (40) pour ménager ainsi le raccord à complémentarité de forme et/ou
dans lequel l'évidement est entouré de préférence d'un bord (16) en saillie radialement vers l'intérieur, qui, rapporté à la pièce (2) annulaire d'appui, rétrécit la section transversale intérieure libre.

9. Dispositif suivant l'une des revendications précédentes,
dans lequel l'élément (4) de liaison a un guidage (18, 20) pour guider le deuxième moyen (56) à complémentarité de forme de la tubulure (40) lors de l'établissement du raccordement du conduit (30) élastique souple à la tubulure (40) de forme rigide,
dans lequel le guidage (18, 20) a de préférence une surface oblique, qui rétrécit,
dans la direction (A) axiale, la section transversale intérieure libre d'une extrémité axiale de la pièce (2) annulaire d'appui jusqu'au premier moyen (14) à complémentarité de forme et/ou
dans lequel l'élément (4) de liaison a de préférence un deuxième guidage (20) pour guider le deuxième moyen (56) à complémentarité de forme de la tubulure (40) lors de l'établissement du raccordement du tuyau (30) élastique souple à la tubulure (40) de forme rigide, deuxième guidage qui, rapporté au premier moyen (14) à complémentarité de forme, est dirigé vers l'extrémité axiale opposée de la pièce (2) annulaire d'appui et/ou
dans lequel le guidage (18, 20) a de préférence des limitations (22, 24) latérales.

10. Dispositif suivant l'une des revendications précédentes,
**caractérisé en ce que** le conduit (30) souple a à peu près la même rigidité de forme et/ou élasticité que la tubulure (40) où le conduit (30) souple est plus élastique mais de forme moins rigide que la tubulure (40).

11. Conduit (30) souple ayant un dispositif (1) suivant l'une des revendications précédentes,
la pièce (2) annulaire d'appui étant raccordée par un raccordement à complémentarité de matière au conduit (30) souple,
dans lequel la pièce (2) annulaire d'appui est intégrée de préférence dans le conduit (30) souple, les premiers moyens (14) à complémentarité de forme étant accessibles sur une surface intérieure du conduit (30) souple.

12. Système constitué d'un conduit (30) souple suivant la revendication 11 et d'une tubulure (40) de forme rigide, la tubulure (40) de forme rigide ayant, sur une surface (52) extérieure radialement, au moins un bec (56) d'encliquetage comme deuxième moyen à complémentarité de forme.

13. Appareil de massage, comprenant
un corps (42) de massage, qui a une tubulure (40) de forme rigide et un dispositif électrique pour faire fonctionner l'appareil de massage et
un manchon élastique d'appareil, qui est constitué sous la forme d'un conduit (30) souple et qui est raccordé au corps (42) de massage pour former un fût de massage, dans lequel le corps (42) de massage et le manchon de massage sont raccordés au moyen d'un dispositif (1) suivant l'une des revendications 1 à 11.

14. Procédé de production d'un raccordement de conduit souple, comportant les stades de
- mise d'un dispositif de raccordement de conduit souple suivant au moins l'une des revendications 1 à 10 dans un moule de coulée;
- remplissage du moule de coulée par de la matière plastique liquide;
- entourage de la pièce (2) d'appui par de la matière plastique pour former un conduit (30) souple ayant un dispositif intégré de raccordement de conduit souple et, éventuellement,
- raccordement à complémentarité de forme du conduit (30) souple à une tubulure (40) au moyen des éléments (4) de liaison.
